# EUROPÄISCHE PATENTSCHRIFT

(11) **EP 3 788 224 B1**
(45) Veröffentlichungstag und Bekanntmachung des Hinweises auf die Patenterteilung: **25.06.2025**
(21) Anmeldenummer: 19721531.2
(22) Anmeldetag: 16.04.2019
(51) Int. Cl.: E05F 11/48, E05B 79/20, E05B 81/06, E05B 81/24, E05B 81/34, E05B 81/64, E05B 81/74, E05F 15/40

(54) **KRAFTFAHRZEUG-ANTRIEBSANORDNUNG**
MOTOR VEHICLE DRIVE ASSEMBLY
SYSTÈME D'ENTRAÎNEMENT DE VÉHICULE AUTOMOBILE

(30) Priorität: 03.05.2018 DE 102018110608
(43) Veröffentlichungstag der Anmeldung: 10.03.2021
(73) Patentinhaber: Kiekert AG, 42579 Heiligenhaus (DE)
(72) Erfinder: BAUER, Christian, 45239 Essen (DE); SCHOLZ, Michael, 45136 Essen (DE); INAN, Ömer, 46282 Dorsten (DE); REUSCH, Manuel, 40589 Düsseldorf (DE)
(74) Vertreter: Andrejewski - Honke Patent- und Rechtsanwälte Partnerschaft mbB
(86) Internationale Anmeldenummer: PCT/DE2019/100348
(87) Internationale Veröffentlichungsnummer: WO 2019/210904

(56) Entgegenhaltungen:
- EP-A1- 1 239 107
- DE-A1- 19 847 080

## Beschreibung

Die Erfindung betrifft eine Kraftfahrzeug-Antriebsanordnung, mit einer Steuereinheit, einem Antriebsglied und einem Widerlager, ferner mit zumindest einer Feder zwischen dem Antriebsglied und dem Widerlager, und mit wenigstens einem Antriebsglied-Sensor, welcher dazu eingerichtet ist, je nach Kraftbeaufschlagung des Antriebsgliedes gegen die Kraft der Feder und eine damit verbundene Relativbewegung zwischen dem Antriebsglied und dem Widerlager Sensorsignale an die Steuereinheit zu übermitteln, wobei der Antriebsglied-Sensor dazu eingerichtet ist, in Abhängigkeit einer Kraftbeaufschlagung des Antriebsgliedes jeweils unterschiedliche kraftabhängige gleitende Sensorsignale zu erzeugen, welche von der Steuereinheit zur Ansteuerung eines Stellgliedes der Kraftfahrzeug-Antriebsanordnung ausgewertet werden können, und wobei das Sensorsignal als Funktion der Kraftbeaufschlagung ausgebildet ist, beispielsweise das Sensorsignal linear von der Kraftbeaufschlagung abhängt.

Kraftfahrzeug-Antriebsordnungen werden typischerweise eingesetzt und genutzt, um beispielsweise Kraftfahrzeugstellglieder wie Kraftfahrzeugklappen, Fensterheber, Sitzverstellungen etc. als spezielle Stellglieder zu betätigen. Das geschieht heutzutage oftmals elektromotorisch. Aus diesem Grund sind solche Kraftfahrzeug-Antriebsanordnungen in der Regel mit Antriebsgliedern ausgerüstet, die als Kraftfahrzeug-Bowdenzuganordnungen mithilfe beispielsweise einer Kraftfahrzeughandhabe und/oder unter Rückgriff auf einen Elektromotor beaufschlagt werden. Dadurch können Bewegungen des betreffenden Kraftfahrzeugstellgliedes oder allgemein einer Antriebseinheit ebenso einfach realisiert werden wie entfernte Anordnungen des betreffenden Kraftfahrzeug-stellgliedes im Vergleich zum für den Antrieb sorgenden Elektromotor.

Solche Kraftfahrzeug-Antriebsordnungen und speziell Kraftfahrzeug-Bowdenzuganordnungen werden vielfältig in Kraftfahrzeugen eingesetzt. Beispiele für deren Anwendungsgebiete sind Tankklappenentriegelungen, Front- und Heckklappenentriegelungen, Sitzverstellungen, Fensterheber und Schiebetürverstellungen, um nur einige wenige zu nennen. Ganz besonders bevorzugt geht es vorliegend um Kraftfahrzeug-Bowdenzuganordnungen, die zur Anwendung bei und in Verbindung mit Kraftfahrzeugtürschlössern eingesetzt werden. Tatsächlich sind Kraftfahrzeugtürschlösser typischerweise über eine solche Bowdenzuganordnung mit einem Türinnengriff, einem Türaußengriff oder auch in einer Zuziehhilfe gekoppelt.

Insbesondere bei sogenannten Zuziehhilfen oder Zuziehantrieben werden über die Bowdenzuganordnung hohe Kräfte vom Antrieb auf beispielsweise eine Drehfalle als Bestandteil eines Gesperres im Innern des zugehörigen Kraftfahrzeugtürschlosses übertragen. Das ist erforderlich, um beispielsweise eine in Vorraststellung befindliche Kraftfahrzeugtür oder einen Türflügel als Kraftfahrzeugstellglied gegen Türgummikräfte oder allgemein Schließkräfte in die Hauptrastposition zu überführen. Sobald sich der betreffende Türflügel bei dem beschriebenen Vorgang in der Hauptrastposition bzw. Hauptraststellung befindet, wird in der Regel ein zugehöriger Zuziehantrieb abgeschaltet. Dennoch können hier Kraftspitzen auftreten, die beispielsweise dann beobachtet werden, wenn im Winter Gegenkräfte eingefrorener Gummidichtungen überwunden werden müssen. Außerdem kann es zu Einklemmungen im Türspalt kommen. Aus diesem Grund wird hier typischerweise mit Mindest-zugkräften gearbeitet, die bei sämtlichen denkbaren Temperaturen und Funktionszuständen eine sichere Einnahme der Hauptrastposition bzw. Hauptraststellung gewährleisten.

Ähnliche Kraftspitzen werden dann beobachtet, wenn beispielsweise ein Kraftfahrzeugtürschloss mechanisch über einen Innentürgriff oder Außentürgriff geöffnet wird. Hier wird insbesondere bei älteren Fahrzeugen und ungünstigen Witterungsbedingungen wie beispielsweise zugefrorener Tür oftmals seitens eines Bedieners mit hohen Kräften gearbeitet. Zwar gibt es an dieser Stelle bereits Ansätze dahingehend, die fraglichen Kraftfahrzeugtürschlösser rein elektrisch zu öffnen. Allerdings sind solche Lösungen teuer.

Bei rein mechanisch arbeitenden Kraftfahrzeugtürschlössern fehlen bisher jedoch überzeugende Lösungen dahingehend, Kraftspitzen in Verbindung mit solchen Bowdenzuganordnungen aufnehmen zu können und insbesondere Beschädigungen beteiligter Elemente wie Türinnengriff, Türaußengriff oder Zuziehantrieb zu vermeiden. - Zwar gibt es im Stand der Technik nach der US 6 104 454 bereits Ansätze dahingehend, ein Kraftfahrzeugtürschloss über einen Bowdenzug, eine Feder und einen Schalter als Sensor zu betätigen. Der Schalter als Sensor wird in diesem Zusammenhang genutzt, um den Öffnungszustand eines Hebels zu erfassen. Die Feder stellt demgegenüber sicher, dass die Hülle der Bowdenzuganordnung nach einer Betätigung einwandfrei zurückgesetzt wird.

Beim gattungsbildenden und insofern nächstkommenden Stand der Technik gemäß der EP 1 239 107 A1 geht es um eine Kraftfahrzeug-Antriebsanordnung, die in Verbindung mit einem Fensterheberantrieb zum Einsatz kommt. In diesem Zusammenhang wird auch mit einem Sensor gearbeitet, um Einklemmungen feststellen zur können.

Ähnliches ist auch durch die DE 198 47 080 A1 bekannt geworden. Hier geht es um ein Einklemmschutzsystem für motorisch über ein flexibles fest eingespanntes Zugmittel bewegte Verstellteile von Kraftfahrzeugen.

Der Erfindung liegt das technische Problem zugrunde, eine derartige Kraftfahrzeug-Antriebsanordnung und insbesondere Kraftfahrzeug-Bowdenzuganordnung vorzugsweise zur Anwendung bei und in Verbindung mit Kraftfahrzeug-Türschlössern so weiter zu entwickeln, dass auf mechanisch einfachem Wege zuverlässig Beschädigungen involvierter Elemente, wie insbesondere angeschlossener Stellglieder und/oder Einklemmvorfälle vermieden werden.

Zur Lösung dieser technischen Problemstellung wird erfindungsgemäß eine Kraftfahrzeug-Antriebsanordnung mit den Merkmalen des Anspruchs 1 vorgeschlagen. Dabei schlägt die Erfindung bei einer gattungsgemäßen Kraftfahrzeug-Antriebsanordnung und insbesondere einer Kraftfahrzeug-Bowdenzuganordnung vorzugsweise zur Anwendung bei und in Verbindung mit Kraftfahrzeug-Türschlössern vor, dass das Stellglied einen Zuziehantrieb für eine Kraftfahrzeug-Klappe oder ein Kraftfahrzeug-Türschloss aufweist, wobei die Steuereinheit dazu eingerichtet ist, aus den Sensorsignalen ein Einklemmsignal oder ein Überlastsignal für das Stellglied abzuleiten und wobei die Steuereinheit ferner dazu eingerichtet ist, zusätzliche Sensorsignale eines Drehfallensensors einer Drehfalle als Bestandteil eines Gesperres im Innern des Kraftfahrzeug-Türschlosses als Zusatzsignal auszuwerten, um die Sensorcharakteristik des Antriebsglied-Sensors anzupassen.

Im Rahmen der Erfindung wird mit einem speziellen Antriebsglied-Sensor gearbeitet. Denn dieser erzeugt kraftabhängige Sensorsignale, das heißt, Sensorsignale, die sich in Abhängigkeit der Kraftbeaufschlagung des Antriebsgliedes entsprechend ändern. Die Sensorsignale sind demzufolge je nach anliegender Kraft unterschiedlich. Außerdem handelt es sich um gleitende digitale oder analoge Sensorsignale, die stufenlos jeden Wert zwischen einem Minimal- und Maximalwert annehmen können. Die fraglichen Sensorsignale können deshalb auch als "wertkontinuierlich" bezeichnet werden.

Dabei ist das von dem betreffenden Antriebsglied-Sensor abgegebene Sensorsignal als Funktion der Kraftbeaufschlagung ausgebildet. Beispielsweise kann das Sensorsignal linear von der Kraftbeaufschlagung abhängen. Das heißt, mit zunehmender Kraft steigt regelmäßig auch das Sensorsignal an. Bei dem Sensorsignal kann es sich ganz generell um ein elektrisch bzw. elektronisch auswertbares Signal handeln, beispielsweise eine seitens des Antriebsglied-Sensors abgegebene Spannung. Alternativ hierzu kann der Antriebsglied-Sensor aber auch je nach Kraftbeaufschlagung unterschiedliche Widerstandswerte erzeugen, die als Sensorsignale erfasst werden können. Grundsätzlich sind auch unterschiedliche Stromstärken denkbar, die von dem Antriebsglied-Sensor in Abhängigkeit von der Kraftbeaufschlagung erzeugt werden.

Bei dem Antriebsglied-Sensor kann es sich um einen solchen handeln, der berührungslos oder taktil arbeitet. Außerdem ist der Antriebsglied-Sensor oftmals zweiteilig mit einem ortsfesten Basisteil und einem demgegenüber beweglichen sowie an das Antriebsglied angeschlossenen Bewegungsteil ausgerüstet.

Konkret kann es sich bei dem Antriebsglied-Sensor um einen Hall-Sensor handeln. In diesem Fall ist das ortsfeste Basisteil als beispielsweise Hall-Sensorchip oder allgemein Halbleiterplättchen ausgebildet, welches von Strom durchflossen wird und in ein senkrecht hierzu verlaufendes Magnetfeld gebracht wird. Das Magnetfeld wird typischerweise von einem Permanentmagneten geliefert, welcher das bewegliche und an das Antriebsglied angeschlossene Bewegungsteil darstellt.

Kommt es zu einer Bewegung zwischen dem Magnet und dem Hall-Sensorchip, so wird eine Ausgangsspannung vom Hall-Sensorchip zur Verfügung gestellt, die entsprechend dem Hall-Effekt proportional zum Produkt aus magnetischer Flussdichte und fließendem Strom ist. Bei konstant gehaltenem Strom und wachsender Flussdichte des Permanentmagneten mit zunehmender Kraftbeaufschlagung ist eine größtenteils lineare Abhängigkeit zwischen der Kraftbeaufschlagung des Antriebsgliedes und dem zugehörigen Sensorsignal zu erwarten. Jedenfalls kann auf diese Weise eine Spannung erzeugt werden, die von der Kraftbeaufschlagung des Antriebsgliedes und mithin dem linearen Weg des Bewegungsteils (des Permanentmagneten) gegenüber dem Hall-Sensorchip abhängt, und zwar im Allgemeinen linear.

Im Rahmen einer anderen alternativen Ausführungsform kann der Antriebsglied-Sensor grundsätzlich auch als Lichtsensor ausgelegt sein. In diesem Fall ist das ortsfeste Basisteil beispielhaft als LED oder Laserdiode ausgelegt, gegenüber der sich das Bewegungsteil je nach Kraftbeaufschlagung des Antriebsgliedes bewegt. Das Bewegungsteil kann mit einer wegabhängigen geometrischen Struktur, beispielsweise Querstrichen zunehmender Strichdicke, ausgerüstet sein, so dass das hiervon reflektierte und mit Hilfe eines Lichtsensors aufgenommene Signal wiederum (linear) vom absolvierten Weg des Bewegungsteils gegenüber dem ortsfesten Basisteil abhängt. Sowohl der Hall-Sensor als auch der Lichtsensor arbeiten üblicherweise berührungslos, das heißt, wartungs- und verschleißfrei.

Grundsätzlich kann an dieser Stelle aber auch ein taktil arbeitender Antriebsglied-Sensor zum Einsatz kommen, beispielsweise in Gestalt eines Schiebewiderstandes und speziell eines Linear-Potentiometers. Ein solcher Schiebewiderstand bzw. ein Linear-Potentiometer verfügt über einen wegabhängigen Widerstand. In diesem Fall führt eine Kraftbeaufschlagung des Antriebsgliedes dazu, dass der vom Schiebewiderstand erzeugte Widerstand beispielhaft linear ansteigt. Dieser linear ansteigende Widerstand kann ebenfalls als Sensorsignal ausgewertet werden.

Jedenfalls greift die Erfindung auf gleitende Sensorsignale zurück, also solche, die stufenlos zwischen einem Minimal- und Maximalwert kontinuierlich variieren. Im Allgemeinen wird man dabei die Auslegung so treffen, dass das Sensorsignal des Antriebsglied-Sensors mit wachsender Kraftbeaufschlagung des Antriebsgliedes ebenfalls linear anwächst. Auf diese Weise können vielfältige Justierungs- und Kalibrierungsmaßnahmen ganz simpel vorgenommen werden, nämlich nicht auf mechanischem Wege, sondern durch entsprechende Softwarekorrekturen.

Erfindungsgemäß werden die sämtlichen Kraftfahrzeug-Klappen mithilfe des Zuziehantriebes als Kraftfahrzeug-Stellglied zugezogen und geschlossen, so dass es erforderlich ist, eine Verknüpfung zwischen dem jeweils mithilfe des Zuziehantriebes bzw. Kraftfahrzeug-Stellgliedes erzeugten Türspaltes und dem korrespondierenden Sensorsignal zur Verfügung zu stellen.

Wenn man dann noch eine lineare Abhängigkeit respektive eine bekannte Abhängigkeit zugrunde legt und die Tatsache berücksichtigt, dass in der Regel im Ruhezustand bzw. Normalfall und einer fehlenden Kraftbeaufschlagung des Antriebsgliedes das Sensorsignal des Antriebsglied-Sensors null ist, kann hieraus jeder Wert des Sensorsignals mit einem entsprechenden Türspalt bzw. einer zugehörigen und am Antriebsglied angreifenden Kraft identifiziert werden.

Die entsprechende Sensorcharakteristik wird in der Steuereinheit hinterlegt und abgebildet. Da die Steuereinheit erfindungsgemäß noch zusätzliche Sensorsignale auswertet, kann die Sensorcharakteristik angepasst werden. Bei den zusätzlichen und von der Steuereinheit ausgewerteten Sensorsignalen handelt es sich um die der Drehfalle als Zusatzsignale.

Steht beispielsweise ein mit der zuzuziehenden Kraftfahrzeug-Klappe ausgerüstetes Kraftfahrzeug an einer Neigungsstrecke und wird hierdurch die Kraft-fahrzeug-Klappe in Richtung öffnen zusätzlich beaufschlagt, so kann die Steuereinheit diesem Umstand dadurch Rechnung tragen, dass die zu den entsprechenden Werten für den Spalt bzw. Türspalt der Kraftfahrzeug-Klappe gehörigen und am Antriebsglied angreifenden Kräfte nachkalibriert werden. Diese Nachkalibrierung berücksichtigt die durch die Hangneigung auf die betreffende Kraftfahrzeug-Klappe zusätzlich einwirkenden Kräfte. Das heißt, die Steuereinheit kann die Sensorsignale in Abhängigkeit der Zusatzsignale neu kalibrieren. Eine solche Neukalibrierung ist alternativ oder zusätzlich auch anhand extern eingespeister Daten möglich. In diesem Fall findet die Neukalibrierung beispielsweise bei einer Wartung oder einem Werkstattaufenthalt statt, beispielsweise wenn sich durch die Benutzung Verschleißerscheinungen und damit einhergehend größere Toleranzen in der Antriebseinheit bzw. im Antrieb des Stellgliedes für beispielsweise die Kraftfahrzeug-Klappe im Beispielfall einstellen. Erfindungsgemäß handelt es sich bei dem weiteren Signal um ein Drehfallensignal. Insbesondere wird dabei die Position der Drehfalle detektiert. Dafür kann bspw. ein Ajar-Signal verwendet werden, welches die Position der Drehfalle übermittelt.

Aus den vom Antriebsglied-Sensor an die Steuereinheit übermittelten Sensorsignalen lassen sich verschiedene exponierte Signale ableiten, erfindungsgemäß das sogenannte Einklemm-Signal oder auch das Überlast-Signal.

Dabei ist meistens die Auslegung so getroffen, dass das Einklemm-Signal ab einer bestimmten und bei Kraftbeaufschlagung des Antriebsgliedes gegen die Kraft der Feder überschrittener erster Kraftschwelle beobachtet wird. Kommt es zu einer fortgesetzten Kraftbeaufschlagung des Antriebsgliedes, so kann eine zweite Kraftschwelle überschritten werden, die demgegenüber zu einer erhöhten Kraftbeaufschlagung des Antriebsgliedes korrespondiert. Diese zweite Kraftschwelle gehört zu einem unterschiedlichen Sensorsignal, folglich dem Überlast-Signal.

Die beiden unterschiedlichen Signale, vorliegend das Einklemm-Signal und das Überlast-Signal, können nun mithilfe der Steuereinheit erfasst und voneinander unterschieden werden. Des Weiteren ist es denkbar, dass die Steuereinheit zusätzlich noch eingerichtet ist, um Signale eines ergänzenden Stellglied-Sensors auszuwerten. Mithilfe dieses Stellglied-Sensors werden im Allgemeinen Bewegungen des Stellgliedes erfasst. So kann die Steuereinheit beispielsweise bei einer Position des Stellgliedes, bei welcher ein Einklemmen nicht (mehr) möglich ist, ein entsprechendes Einklemm-Signal des Antriebsglied-Sensors ignorieren und gleichwohl dafür sorgen, dass das fragliche Stellglied unverändert beaufschlagt wird. Erst wenn der Antriebsglied-Sensor im geschilderten Beispielfall ein Überlast-Signal an die Steuereinheit übermittelt, mag die Steuereinheit dafür sorgen, dass das Stellglied bzw. die zugehörige Antriebseinheit für das hiervon beaufschlagte Kraftfahrzeug-Stellglied nicht (mehr) weiter beaufschlagt wird, um Überlastungen und eine Beschädigung der betreffenden Antriebseinheit zu verhindern. Auf diese Weise kann einfach und sensorisch zwischen einem Einklemmschutz und einem Überlastschutz unterschieden werden. Diese sensorische Unterscheidung lässt sich einfach und aufwandsarm in eine Kraftfahrzeug-Antriebsanordnung und insbesondere eine Kraftfahrzeug-Bowdenzuganordnung integrieren.

Denn die Steuereinheit kann je nach einem Signal des Stellglied-Sensors sowie in Abhängigkeit von Signalen des Antriebsglied-Sensors das Stellglied entsprechend steuern und/oder regeln. So ist es bspw. denkbar, dass das Einklemm-Signal des Antriebsglied-Sensors dann und nur dann ignoriert wird, wenn das Signal des Stellglied-Sensors darauf schließen lässt, dass ein "Einklemmen" nicht mehr möglich ist. Ein solches Signal des Stellglied-Sensors gehört beispielsweise bei einer Kraftfahrzeug-Schwenktür zu einem Bereich, bei dem ein zwischen der fraglichen Schwenktür und einer Kraftfahrzeugkarosserie verbliebener Spalt zu klein ist, um beispielsweise ein Kleidungsstück, einen Finger etc. einklemmen zu können. Nur in einem solchen Fall ignoriert die Steuereinheit ein entsprechendes Einklemm-Signal, welches beispielsweise dadurch verursacht worden ist, dass die zugehörige Schwenktür gegen eine beispielsweise vereiste Türgummidichtung zugezogen werden soll.

Denn auch in diesem Fall wird letztlich ein Kraftanstieg im Antriebsglied beobachtet, welcher dazu führt, dass die Feder zwischen dem Antriebsglied und dem Widerlager komprimiert wird. Diese Kraftbeaufschlagung des Antriebsgliedes gegen die Kraft der Feder und eine damit verbundene Relativbewegung zwischen dem Antriebsglied und dem Widerlager ist so groß, dass überhaupt ein entsprechendes Sensorsignal des Antriebsglied-Sensors an die Steuereinheit übermittelt wird. Dieses Sensorsignal gehört im Allgemeinen zu dem Einklemm-Signal. Wenn jedoch das Stellglied bzw. Kraftfahrzeugstellglied, konkret die Kraft-fahrzeug-Schwenktür als Kraftfahrzeugklappe, nur noch einen so geringen Spalt mit der Kraftfahrzeug-Karosserie einschließt, dass ein Einklemmen nicht mehr möglich ist, wird das fragliche Einklemm-Signal aus den zuvor geschilderten Gründen ignoriert.

So oder so stützt sich das Antriebsglied über die Feder an dem Widerlager ab. Sobald am Antriebsglied folglich eine Kraft angreift, die größer ist als die von der Feder aufgebaute Gegenkraft, wird die Feder komprimiert. Ab einer bestimmten Kompression der Feder wird der Antriebsglied-Sensor ausgelöst und erzeugt ein entsprechendes Sensorsignal. Das ist ein klares Indiz dafür, dass eine zuvor mithilfe der Feder eingestellte maximale und vorgegebene Kraft überschritten wird. Denn die Feder sorgt letztlich dafür, dass das Antriebsglied gegenüber dem Widerlager vorgespannt wird.

Auf diese Weise lassen sich unterschiedliche Auslösecharakteristiken für den jeweiligen Antriebsglied-Sensor realisieren. Denn der Antriebsglied-Sensor ist in Abhängigkeit von der Auslegung der Feder und/oder der Auslegung einer den Sensor beaufschlagenden Kontur am Antriebsglied hinsichtlich seiner Auslösecharakteristik veränderbar ausgelegt. Soll beispielswiese die Kraftschwelle erhöht werden, ab der der jeweilige Antriebsglied-Sensor beaufschlagt wird, so kann man dies beispielsweise dadurch erreichen, dass eine Feder mit größerer Federkonstante eingesetzt wird. Alternativ oder zusätzlich kann auch auf mehrere parallel geschaltete Federn zurückgegriffen werden.

Das Antriebsglied selbst kann mit einem Elektromotor bzw. allgemein der Antriebseinheit und/oder einer Kraftfahrzeug-Handhabe gekoppelt werden. Dadurch lässt sich das mithilfe des Antriebsgliedes beaufschlagte Stellglied bzw. die Antriebseinheit für das Kraftfahrzeug-Stellglied manuell mithilfe der Kraftfahrzeughandhabe ebenso wie elektromotorisch beaufschlagen. Das Antriebsglied selbst kann als Kraftfahrzeugbowdenzug ausgebildet sein, sodass es sich insgesamt bei der beschriebenen Kraftfahrzeug-Antriebsanordnung vorzugsweise um eine Kraftfahrzeug-Bowdenzuganordnung handelt, wie dies bereits beschrieben und erläutert worden ist.

Im Ergebnis wird eine Kraftfahrzeug-Antriebsanordnung zur Verfügung gestellt, bei der insgesamt eine Kraftbegrenzung erfolgt. Denn das Antriebsglied stützt sich über die zumindest eine Feder am Widerlager ab. Sobald die am Antriebsglied angreifenden Kräfte die von der Feder aufgebauten Gegenkräfte übersteigen, wird die Feder komprimiert. Je nach Kompression der Feder führt dies dazu, dass eine mehr oder minder signifikante Relativbewegung zwischen dem Antriebsglied und dem Widerlager beobachtet wird. Die korrespondierende Relativbewegung kann mit Hilfe des Antriebsglied-Sensors genutzt werden, um entsprechende Sensorsignale an die Steuereinheit zu übermitteln. Sobald bestimmte und variabel einstellbare Kraftschwellen überschritten werden, kann die Steuereinheit beispielsweise ein hiervon beaufschlagtes und angesteuertes Stellglied schlicht und ergreifend abstoppen oder in Gegenrichtung bewegen. Bei einer Kraftfahrzeugklappe als Kraftfahrzeugstellglied kann auch so vorgegangen werden, dass die fragliche Kraftfahrzeugklappe in Gegenrichtung reversiert wird. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße Kraftfahrzeug-Antriebsanordnung zur Anwendung in Verbindung mit einem dargestellten Kraftfahrzeug-Türschloss,
- Fig. 2A: das Antriebsglied nach Fig. 1 inklusive Widerlager in unbetätigtem Zustand,
- Fig. 2B: den Gegenstand nach Fig. 2A in betätigtem Zustand,
- Fig. 3: das Sensorsignal in Abhängigkeit der am Antriebsglied angreifenden Kraft schematisch und
- Fig. 4: ein Kraftfahrzeug-Stellglied in Gestalt einer gegenüber einer Kraftfahrzeug-Karosserie bewegbaren Kraftfahrzeugklappe bei Anwendung der Erfindung.

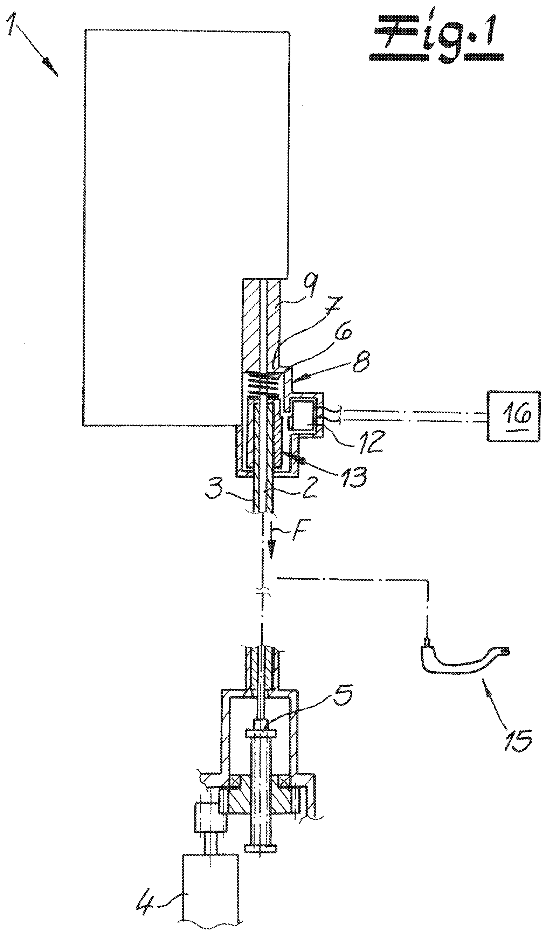

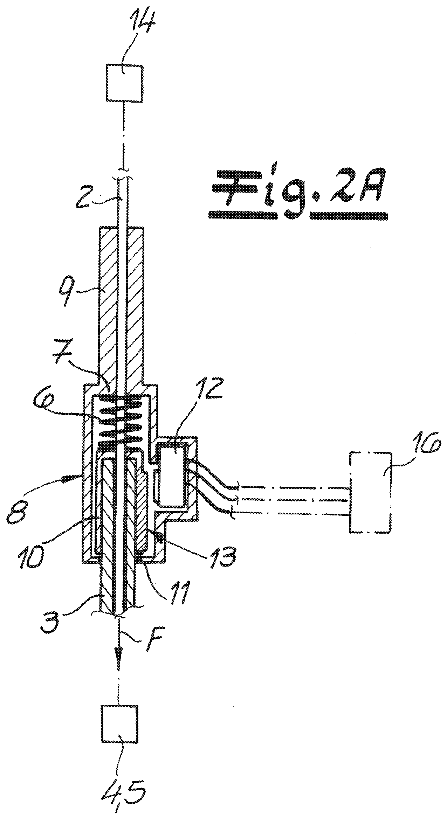

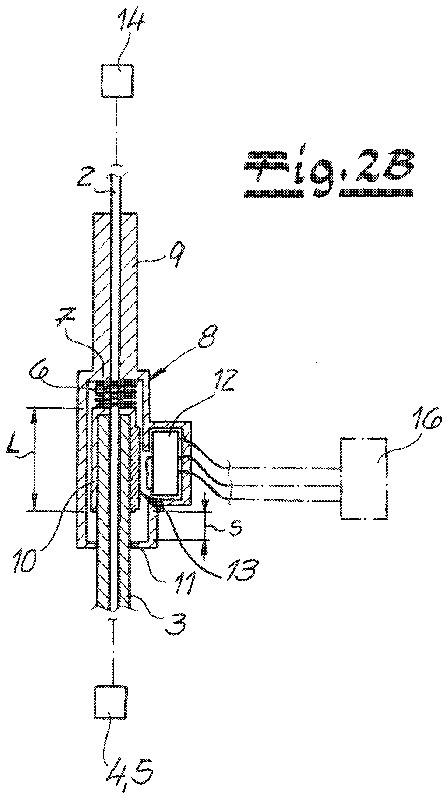

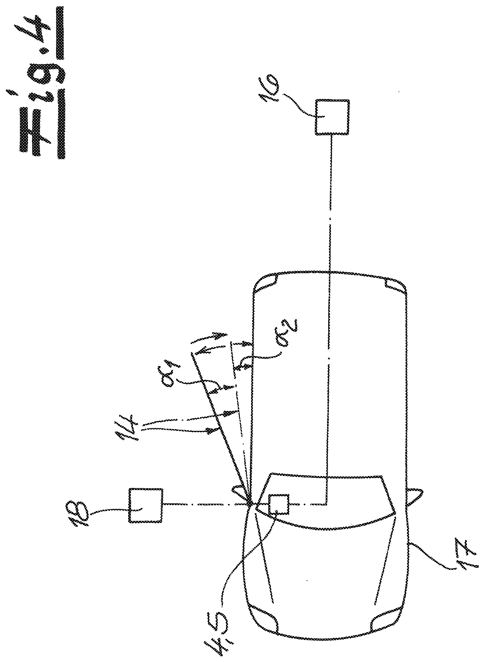

In den Fig. 1, 2A und 2B sowie 4 ist jeweils eine Kraftfahrzeug-Antriebsanordnung dargestellt. Bei der Kraftfahrzeug-Antriebsanordnung handelt es sich im Rahmen der Variante nach den zuvor angegebenen Fig. 1, 2A, 2B und 4 jeweils um eine Kraftfahrzeug-Bowdenzuganordnung. Die Kraftfahrzeug-Antriebsanordnung und insbesondere Kraftfahrzeug-Bowdenzuganordnung entsprechend der Darstellung in der Fig. 1 ist nicht einschränkend in Verbindung mit einem dort dargestellten Kraftfahrzeugtürschloss 1 als Stellglied bzw. Kraftfahrzeug-Stellglied und zu dessen Antrieb ausgelegt. Die Kraftfahrzeug-Bowdenzuganordnung nach den Fig. 2A und 2B kommt dagegen zur Anwendung bei und in Verbindung mit Kraftfahrzeug-Stellgliedern, bei denen es sich nicht um das Kraftfahrzeugtürschloss 1 nach der Fig. 1, sondern im Beispielfall der Fig. 4 um eine Kraftfahrzeugklappe und konkret eine Kraftfahrzeug-Schwenktür 14 handelt.

Die Kraftfahrzeug-Antriebsanordnung und insbesondere Kraftfahrzeug-Bowdenzuganordnung entsprechend der Darstellung in der Fig. 1 ist zunächst einmal mit einem Antriebsglied 2, 3 ausgerüstet. Das Antriebsglied 2, 3 ist im Ausführungsbeispiel als Bowdenzug bzw. als Kraftfahrzeug-Bowdenzug 2, 3 ausgelegt. Zu diesem Zweck findet sich eine Seele 2 und eine die Seele 2 aufnehmende Hülle 3. Wie üblich mag die Seele 2 als Stahlseil oder auch Kunststoffseil ausgebildet sein. Bei der Hülle 3 kann es sich um eine Stahlhülle oder auch Kunststoffhülle handeln. Die Seele 2 lässt sich axial gegenüber der ortsfesten Hülle 3 hin und her bewegen, wie beispielsweise in den Figuren 2A und 2B dargestellt ist. Dabei fungiert die Hülle 3 insgesamt als Widerlager zur Kraftübertragung über die Seele 2.

Konkret und nach dem Ausführungsbeispiel in der Figur 1 ist die Seele 2 an einen verfahrbaren Schlitten bzw. ein Linearstellglied 5 eines Zuziehantriebes 4, 5 angeschlossen. Das Linearstellglied 5 wird mithilfe eines Elektromotors 4 angetrieben und stellt erfindungsgemäß eine Antriebseinheit 4, 5, nämlich den Zuziehantrieb 4, 5, für ein Kraftfahrzeug-Stellglied, konkret das Kraftfahrzeugtürschloss 1, da.

Beispielsweise sorgt die Antriebseinheit 4, 5 bzw. der Zuziehantrieb 4, 5 nach dem Ausführungsbeispiel in der Figur 1 bei einem Zuziehvorgang eines Gesperres im Inneren des Kraftfahrzeugtürschlosses 1 dafür, dass die Seele 2 mit einer in der Figur 1 angedeuteten Zugkraft F beaufschlagt wird. Die auf diese Weise erzeugte Zugkraft F kann mithilfe der Seele 2 bis ins Innere des Kraftfahrzeugtürschlosses 1 übertragen werden, weil sich die Seele 2 gegenüber der Hülle 3 als Widerlager abstützt und gegenüber der Hülle 3 hin und her bewegen lässt. Im dargestellten Ausführungsbeispiel sorgt die Zugbewegung der Seele 2 dafür, dass eine Drehfalle im Innern des Kraftfahrzeugtürschlosses 1 als Bestandteil eines Gesperres von ihrer zuvor eingenommenen Vorraststellung in eine Hauptraststellung überführt wird. Details eines entsprechend aufgebauten Zuziehantriebes mit über einen Bowdenzug 2, 3 beaufschlagter Drehfalle finden sich in der DE 10 2015 100 750 A1 der Anmelderin. Das gilt selbstverständlich nur beispielhaft und ist keineswegs einschränkend. Der Bowdenzug 2, 3 kann vorzugsweise über eine Zuziehhilfe oder manuell über eine Kraftfahrzeughandhabe 15 beaufschlagt werden

Man erkennt, dass zusätzlich eine Feder 6 vorgesehen ist. Die Feder 6 findet sich nach dem Ausführungsbeispiel zwischen der Hülle 3 und einem Widerlager 7. Auf diese Weise stützt sich das Antriebsglied 2, 3 aus der Seele 2 und der Hülle 3 insgesamt über die Feder 6 an dem Widerlager 7 ab. Nach der Darstellung in der Figur 1 ist das Widerlager 7 als Basis in oder an einer Abstützung 8 ausgebildet. Die Abstützung 8 kann entsprechend der Darstellung in der Figur 1 fest an ein Gehäuse des Kraftfahrzeugtürschlosses 1 angeschlossen sein.

Alternativ dazu ist auch eine fliegende Lagerung der Abstützung 8 und folglich des Widerlagers 7 an der Hülle 3 möglich, wie man dies in dem Ausführungsbeispiel nach den Fig. 2A und 2B erkennt. Die Abstützung 8 ist mit einem die Seele 2 bzw. deren Hülle 3 aufnehmenden Fortsatz 9 ausgerüstet. Dadurch wird die Abstützung 8 inkl. Fortsatz 9 einwandfrei und fliegend an der Hülle 3 gelagert. Denn die Abstützung 8 inkl. Fortsatz 9 ist in der Lage, im Vergleich zu der Hülle 3 und damit dem Antriebsglied 2, 3 eine Relativbewegung in Axialrichtung zu vollführen.

Die Abstützung 8 ist dabei insgesamt so ausgelegt, dass sie die Feder 6 einhaust. Tatsächlich ist die Abstützung 8 als Hohlzylinder ausgebildet. Neben einer Hohlzylinder-Geometrie ist auch eine ovale, eckige oder weitere polygone Geometrien denkbar. Der Fortsatz 9 ist ebenfalls zylindrisch ausgelegt. Gleiches gilt für einen Kragen 10, welcher die Hülle 3 im Inneren der Abstützung 8 umschließt. Dazu ist die Abstützung 8 zunächst einmal mit einer Öffnung 11 ausgerüstet, damit die Hülle 3 inkl. hierin geführter Seele 2 in das hohlzylindrische Gehäuse der Abstützung 8 eingeführt und hierin axial hin und her bewegt werden kann.

Der Kragen 10 verfügt über eine Axiallänge L, welche ein Spiel des Antriebsgliedes 2, 3 im Inneren der hohlzylindrischen Abstützung 8 vorgibt und zulässt. Tatsächlich lässt der Kragen 10 und mit ihm die Hülle 3 unter zusätzlicher Berücksichtigung der Ausrichtung der Feder 6 insgesamt einen maximal absolvierbaren Weg s zu, welchen das Antriebsglied 2, 3 relativ gegenüber dem Widerlager 7 absolvieren kann, bevor der Kragen 10 insgesamt auf Block fährt. Das ist in der Figur 2B angedeutet.

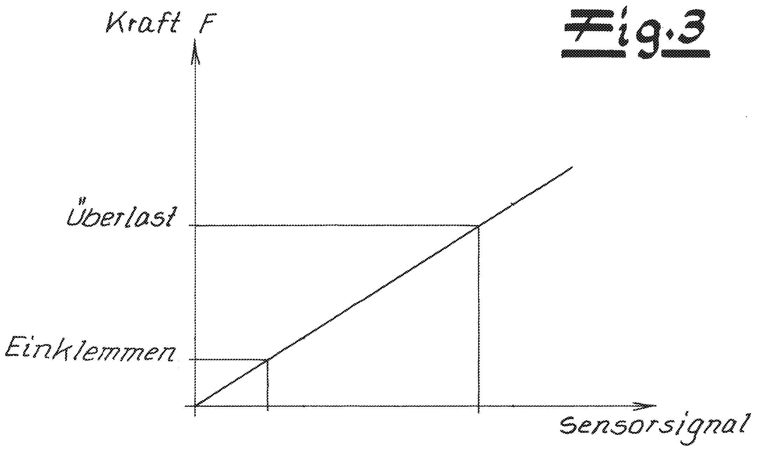

Zusätzlich ist noch ein in die Abstützung 8 integrierter Antriebsglied-Sensor 12, 13 vorgesehen. Der Antriebsglied-Sensor 12, 13 verfügt ausweislich der Darstellung in den Fig. 2A und 2B über ein ortsfestes Basisteil 12 und ein demgegenüber bewegliches sowie an das Antriebsglied 2, 3 angeschlossenes Bewegungsteil 13. Der Antriebsglied-Sensors 12, 13 ist im Ausführungsbeispiel als Hall-Sensor oder Schiebewiderstand bzw. Linearpotentiometer ausgelegt. Sobald es zu einer Relativbewegung zwischen dem ortsfesten Basisteil 12 und dem Bewegungsteil 13 kommt, sorgt der Antriebsglied-Sensor 12 dafür, dass entsprechende Sensorsignale erzeugt werden, die von der am Antriebsglied 2, 3 angreifenden Kraft abhängen, und zwar linear wie dies schematisch in der Fig. 3 dargestellt ist und nachfolgend noch näher erläutert wird.

Betrachtet man zunächst den unbetätigten und in der Fig. 2A dargestellten Zustand, so führt eine Kraftbeaufschlagung der Seele 2 innerhalb der Hülle 3 dazu, dass mit Hilfe des Antriebsgliedes 2, 3 die dort dargestellte Kraft F auf das mit Hilfe des Antriebsgliedes 2, 3 beaufschlagte Kraftfahrzeugstellglied übertragen wird. Hierbei kann es sich im Falle des zuvor bereits beschriebenen Zuziehantriebes 4, 5 beim Ausführungsbeispiel nach der Fig. 1 um die dort bereits angesprochene Drehfalle im Innern des Kraftfahrzeugtürschlosses 1 handeln. Im Rahmen der Variante nach den Fig. 2A und 2B wird mit Hilfe des Antriebsgliedes 2, 3 die in der Fig. 4 dargestellte Kraftfahrzeug-Schwenktür 14 beaufschlagt, wie dies nachfolgend noch im Detail erläutert wird.

So lange bei der Beaufschlagung des entsprechenden Kraftfahrzeug-Stellgliedes mit Hilfe der Kraft F "normale" Betätigungskräfte beobachtet werden, kommt es zu keiner signifikanten Relativbewegung zwischen dem Antriebsglied 2, 3 und dem Widerlager 7 und folglich auch nicht zu signifikanten Relativbewegungen zwischen dem ortsfesten Basisteil 12 und dem Bewegungsteil 13 als Bestandteile des Antriebsglied-Sensors 12, 13. Dementsprechend ist das vom Antriebsglied-Sensor 12, 13 abgegebene Signal in diesem Fall null oder nahezu null. Denn in diesem Fall sorgen die von der Feder 6 aufgebauten Gegenkräfte dafür, dass die Feder 6 nicht signifikant komprimiert wird.

Übersteigt jedoch die zur Beaufschlagung des Kraftfahrzeug-Stellgliedes erforderliche Kraft F eine bestimmte Kraftschwelle, so führt dies dazu, dass die Feder 6 so weit komprimiert wird, dass entsprechend der Darstellung in der Fig. 2B eine Relativbewegung zwischen dem Bewegungsteil 13 und dem Basisteil 12 des Antriebsglied-Sensors 12 beobachtet wird und folglich ein entsprechendes Sensorsignal an die Steuereinheit 16 übermittelt und abgegeben wird. Hierzu korrespondiert eine Kompression der Feder 6 und damit einhergehend das Überschreiten der zuvor bereits angesprochenen ersten Kraftschwelle. Dieses zugehörige Sensorsignal wird nachfolgend als Einklemmsignal interpretiert und ist in der Fig. 3 eingezeichnet und entsprechend kenntlich gemacht.

Wird das Antriebsglied 2, 3 unverändert und weitergehend mit einer ansteigenden Kraft F beaufschlagt, so führt dies dazu, dass die Feder 6 ausgehend von der Funktionsstellung in der Fig. 2B zunehmend komprimiert wird. Diese zunehmende Kompression wird mit einem zweiten Sensorsignal identifiziert, das nach dem Ausführungsbeispiel zu einem Überlast-Signal korrespondiert und ebenfalls in der Fig. 3 eingezeichnet ist.

Das Überlast-Signal des Antriebsgliedsensors 12, 13 führt nach dem Ausführungsbeispiel dazu, dass über die Steuereinheit 16 die Antriebseinheit 4, 5 bzw. der Zuziehantrieb entsprechend der Darstellung in der Fig. 1 angehalten und gegebenenfalls reversiert wird. Entsprechendes mag für den Antrieb 4, 5 im Ausführungsbeispiel nach der Fig. 4 gelten. Anhand der Fig. 3 erkennt man, dass das Sensorsignal des Antriebsglied-Sensors 12, 13 als Funktion der Kraftbeaufschlagung des Antriebsgliedes 2, 3 ausgebildet ist. Nach dem Ausführungsbeispiel hängt das Sensorsignal linear von der Kraftbeaufschlagung ab, das heißt, das Sensorsignal wächst vorliegend mit zunehmender Kraft F am Antriebsglied 2, 3 linear an.

In der Fig. 4 ist nun ein weiterer Anwendungsfall für die zuvor im Detail beschriebene Kraftfahrzeug-Antriebsanordnung dargestellt. Tatsächlich wird an dieser Stelle mit einem Antrieb 4, 5 gearbeitet, der so ausgelegt sein kann, wie dies für den Zuziehantrieb 4, 5 entsprechend der Darstellung in der Fig. 1 gilt. Grundsätzlich kann es sich bei dem Antrieb 4, 5 aber auch um eine nicht dargestellte Getriebeanordnung handeln. Jedenfalls sorgt der Antrieb 4, 5 in der Darstellung nach der Fig. 4 dafür, dass die dort wiedergegebene Kraftfahrzeug-Schwenktür 14 als vom Antrieb 4, 5 beaufschlagtes Kraftfahrzeug-Stellglied gegenüber einer Kraftfahrzeug-Karosserie 17 geschlossen wird, wie dies die unterschiedlichen Stellungen der Kraftfahrzeug-Schwenktür 14 in der Fig. 4 andeuten. Dazu wird der Antrieb 4, 5 mit Hilfe der Steuereinheit 16 beaufschlagt. Der Antrieb 4, 5 arbeitet seinerseits auf das Antriebsglied 2, 3, und zwar so, wie dies beispielsweise in den Fig. 2A und 2B wiedergegeben ist.

Zum zuvor bereits angesprochenen Einklemm-Signal gehört im Allgemeinen eine Kraftbeaufschlagung des Antriebsgliedes 2, 3 mit beispielsweise einer seitens der Antriebseinheit 4, 5 erzeugten Zugkraft bzw. Kraft F von 50 N.

Hierzu mag die erste Kraftschwelle gehören. Die zweite Kraftschwelle wird dann erreicht, wenn die Zugkraft bzw. Kraft F am Antriebsglied 2, 3 Werte von beispielsweise 250 N erreicht oder überschreitet. Das gilt selbstverständlich nur beispielhaft und ist keinesfalls einschränkend.

So führt das von der Steuereinheit 16 erfasste Einklemmsignal entsprechend der in der Fig. 3 wiedergegebenen Schwelle in einem ersten Schwenkwinkelbereich α₁ dazu, dass die Steuereinheit 16 beim Auftreten des fraglichen Einklemm-Signals den Antrieb 4, 5 in Richtung Reversieren beaufschlagt. Denn in diesem Schwenkwinkelbereich α₁ wird das Einklemm-Signal seitens der Steuereinheit 16 dahingehend interpretiert, dass im Türspalt zwischen der Kraftfahrzeug-Schwenktür 14 und der Kraftfahrzeug-Karosserie 17 ein Kleidungsstück oder sogar ein Finger einer Bedienperson eingeklemmt wird und hier dafür sorgt, dass die Feder 6 komprimiert wird. Als Folge hiervon kommt es zu dem Sensorsignal des Antriebsglied-Sensors 12, 13 aufgrund einer daraus resultierenden Relativbewegung zwischen dem Bewegungsteil 13 und dem ortfesten Basisteil 12.

Befindet sich jedoch die Kraftfahrzeug-Schwenktür 14 bei dem auftretenden Einklemm-Signal im zweiten Schwenkwinkelbereich α₂ entsprechend der Darstellung in der Fig. 4, so sorgt die Steuereinheit 16 dafür, dass trotz auftretendem Einklemm-Signal die Antriebseinheit 4, 5 unverändert beaufschlagt wird. Denn zu diesem Zweck wertet die Steuereinheit 16 zusätzliche Signale eines Stellglied-Sensors 18 aus. Mit Hilfe dieses Stellglied-Sensors 18 kann im Beispielfall die Drehwinkelposition respektive der von der Kraftfahrzeug-Schwenktür 14 gegenüber der Kraftfahrzeug-Karosserie 17 überschrittene Schwenkwinkel erfasst werden. Nimmt die Kraftfahrzeug-Schwenktür 14 einen zum Schwenkwinkelbereich α₂ gehörigen Schwenkwinkel ein, so interpretiert dies die Steuereinheit 16 dahingehend, dass ein Einklemmen nicht mehr möglich ist. Das lässt sich typischerweise darauf zurückführen, dass für ein Fingereinklemmen der Türspalt schlicht und ergreifend zu schmal ist.

Aus diesem Grund wird in dem Schwenkwinkelbereich α₂ ein Einklemm-Signal des Antriebsglied-Sensors 12, 13 seitens der Steuereinheit 16 ignoriert. Die Steuereinheit 16 beaufschlagt die Antriebseinheit 4, 5 in diesem Schwenkwinkelbereich α₂ unverändert, um die Kraftfahrzeug-Schwenktür 14 im Beispielfall voll zuzuziehen. Denn das Einklemm-Signal wird in diesem Fall beispielsweise als Vereisung oder dergleichen interpretiert. Der Zuziehvorgang erfolgt dabei so lange, bis das Überlast-Signal seitens der Steuereinheit 16 erfasst wird. Darauf folgend wird die Antriebseinheit 4, 5 gestoppt.

Alternativ zu dem Stellglied-Sensor 18 kann im Rahmen der Erfindung die Steuereinheit 16 zusätzlich zu den Signalen des Drehfallensensors aber auch noch weitere Zusatzsignale berücksichtigen, die bspw. von einem Neigungssensor an oder in der Kraftfahrzeugkarosserie 17 stammen.

### Bezugszeichenliste

- 1: Kraftfahrzeugtürschloss
- 2: Seele
- 3: Hülle
- 2, 3: Antriebsglied (Kraftfahrzeug-Bowdenzug)
- 4: Elektromotor
- 4, 5: Zuziehantrieb (Antriebseinheit)
- 5: Linearstellglied
- 6: Feder
- 7: Widerlager
- 8: Abstützung
- 9: Fortsatz
- 10: Kragen
- 11: Öffnung
- 12: Basisteil
- 13: Bewegungsteil
- 12, 13: Antriebsglied-Sensor
- 14: Kraftfahrzeug-Schwenktür
- 15: Kraftfahrzeughandhabe
- 16: Steuereinheit
- 17: Kraftfahrzeug-Karosserie
- F: Zugkraft

## Patentansprüche

1. Kraftfahrzeug-Antriebsanordnung, mit einer Steuereinheit (16), einem Antriebsglied (2, 3) und einem Widerlager (7), ferner mit zumindest einer Feder (6) zwischen dem Antriebsglied (2, 3) und dem Widerlager (7), und mit wenigstens einem Antriebsglied-Sensor (12), welcher dazu eingerichtet ist, je nach Kraftbeaufschlagung des Antriebsgliedes (2, 3) gegen die Kraft der Feder (6) und eine damit verbundene Relativbewegung zwischen dem Antriebsglied (2, 3) und dem Widerlager (7) Sensorsignale an die Steuereinheit (16) zu übermitteln, wobei
der Antriebsglied-Sensor (12, 13) dazu eingerichtet ist, in Abhängigkeit einer Kraftbeaufschlagung des Antriebsgliedes (2, 3) jeweils unterschiedliche kraftabhängige gleitende Sensorsignale zu erzeugen, welche von der Steuereinheit (16) zur Ansteuerung eines Stellgliedes der Kraftfahrzeug-Antriebsanordnung ausgewertet werden können, und wobei
das Sensorsignal als Funktion der Kraftbeaufschlagung ausgebildet ist, beispielsweise das Sensorsignal linear von der Kraftbeaufschlagung abhängt,
wodurch eine in der Steuereinheit hinterlegbare und von der Steuereinheit abbildbare Sensorcharakteristik ausgebildet wird,
**dadurch gekennzeichnet, dass**
das Stellglied einen Zuziehantrieb (4, 5) für eine Kraftfahrzeug-Klappe oder ein Kraftfahrzeug-Türschloss (1) aufweist, wobei
die Steuereinheit (16) dazu eingerichtet ist, aus den Sensorsignalen ein Einklemmsignal oder ein Überlast Signal für das Stellglied abzuleiten, und wobei
die Steuereinheit (16) ferner dazu eingerichtet ist, zusätzliche Sensorsignale eines Drehfallensensors einer Drehfalle als Bestandteil eines Gesperres im Innern des Kraftfahrzeug-Türschlosses (1) als Zusatzsignal auszuwerten, um die in der Steuereinheit hinterlegte und abgebildete Sensorcharakteristik des
Antriebsglied-Sensors (12, 13) anzupassen.

2. Kraftfahrzeug-Antriebsanordnung nach Anspruch 1, **dadurch gekennzeichnet, dass** der Antriebsglied-Sensor (12, 13) berührungslos oder taktil arbeitet.

3. Kraftfahrzeug-Antriebsanordnung nach einem der Ansprüche 1 oder 2, **dadurch gekennzeichnet, dass** der Antriebsglied-Sensor (12, 13) zweiteilig mit einem ortsfesten Basisteil (12) und einem demgegenüber beweglichen sowie an das Antriebsglied (2, 3) angeschlossenen Bewegungsteil (13) ausgebildet ist.

4. Kraftfahrzeug-Antriebsanordnung nach einem der Ansprüche 1 bis 3, **dadurch gekennzeichnet, dass** der Antriebsglied-Sensor (12, 13) als Hall-Sensor, Lichtsensor, Schiebewiderstand oder dergleichen ausgebildet ist.

5. Kraftfahrzeug-Antriebsanordnung nach Anspruch 1, **dadurch gekennzeichnet, dass** die Steuereinheit (16) die Sensorsignale in Abhängigkeit der Zusatzsignale und/oder extern eingespeister Daten neu kalibriert.

6. Kraftfahrzeug-Antriebsanordnung nach Anspruch 1, **dadurch gekennzeichnet, dass** die Kraftfahrzeug-Klappe als Kraftfahrzeug-Schwenktür (14), Kraftfahrzeug-Schiebetür, Kraftfahrzeug-Schiebedach, Kraftfahrzeug-Tankklappe, Kraftfahrzeug-Heckklappe usw. ausgebildet ist.

## Claims

1. Motor vehicle drive assembly, comprising a control unit (16), a drive member (2, 3) and an abutment (7), further comprising at least one spring (6) between the drive member (2, 3) and the abutment (7), and at least one drive member sensor (12), which is designed to transmit sensor signals to the control unit (16), depending on the force applied to the drive member (2, 3), against the force of the spring (6) and a relative movement associated therewith between the drive member (2, 3) and the abutment (7),
the drive member sensor (12, 13) being designed to generate different force-dependent sliding sensor signals depending on the force applied to the drive member (2, 3), which can be evaluated by the control unit (16) for controlling an actuator of the motor vehicle drive assembly, and
the sensor signal being designed as a function of the force applied, for example the sensor signal depends linearly on the force applied, whereby a sensor characteristic is formed that can be stored in the control unit and can be mapped by the control unit,
**characterized in that**
the actuator has a closing drive (4, 5) for a motor vehicle flap or a motor vehicle door lock (1),
the control unit (16) being arranged to derive an anti-trap signal or an overload signal for the actuator from the sensor signals, and
the control unit (16) being further designed to evaluate additional sensor signals of a catch sensor of a catch as a component of a locking mechanism inside the motor vehicle door lock (1) as an additional signal in order to adapt the sensor characteristic of the drive element sensor (12, 13) stored and mapped in the control unit.

2. Motor vehicle drive assembly according to claim 1, **characterized in that** the drive element sensor (12, 13) operates in a contactless or tactile manner.

3. Motor vehicle drive assembly according to any of claims 1 or 2,
**characterized in that** the drive member sensor (12, 13) is formed as two parts with a stationary base part (12) and a moving part (13) which is movable relative to the base part and is connected to the drive member (2, 3).

4. Motor vehicle drive assembly according to any of claims 1 to 3,
**characterized in that** the drive member sensor (12, 13) is designed as a Hall-effect sensor, a light sensor, a sliding resistor or the like.

5. Motor vehicle drive assembly according to claim 1, **characterized in that** the control unit (16) recalibrates the sensor signals depending on the additional signals and/or externally fed data.

6. Motor vehicle drive assembly according to claim 1, **characterized in that** the motor vehicle flap is designed as a motor vehicle swing door (14), a motor vehicle sliding door, a motor vehicle sliding roof, a motor vehicle fuel filler flap, a motor vehicle tailgate, etc.

## Revendications

1. Agencement d'entraînement de véhicule automobile, comportant une unité de commande (16), un organe d'entraînement (2, 3) et une butée (7), comportant en outre au moins un ressort (6) entre l'organe d'entraînement (2, 3) et la butée (7), et comportant au moins un capteur (12) d'organe d'entraînement, qui est conçu pour transmettre des signaux de capteur à l'unité de commande (16) selon l'application de force à l'organe d'entraînement (2, 3) contre la force du ressort (6) et un mouvement relatif qui y est lié entre l'organe d'entraînement (2, 3) et la butée (7), dans lequel
le capteur (12, 13) d'organe d'entraînement est conçu pour générer, en fonction d'une application de force à l'organe d'entraînement (2, 3), respectivement différents signaux de capteur glissants en fonction de la force, qui peuvent être évalués par l'unité de commande (16) pour la commande d'un organe de réglage de l'agencement d'entraînement de véhicule automobile, et dans lequel
le signal de capteur est réalisé en fonction de l'application de force, par exemple le signal de capteur dépend linéairement de l'application de force, moyennant quoi une caractéristique de capteur pouvant être mémorisée dans l'unité de commande et pouvant être reproduite par l'unité de commande est réalisée,
**caractérisé en ce que**
l'organe de réglage présente un entraînement de fermeture (4, 5) pour un volet de véhicule automobile ou une serrure de porte (1) de véhicule automobile, dans lequel
l'unité de commande (16) est conçue pour dériver un signal de serrage ou un signal de surcharge pour l'organe de réglage à partir des signaux de capteur, et dans lequel
l'unité de commande (16) est en outre conçue pour évaluer des signaux de capteur supplémentaires d'un capteur de loquet rotatif d'un loquet rotatif en tant que composant d'un mécanisme de verrouillage à l'intérieur de la serrure de porte (1) de véhicule automobile en tant que signal supplémentaire, pour adapter la caractéristique de capteur du capteur (12, 13) d'organe d'entraînement mémorisée et représentée dans l'unité de commande.

2. Agencement d'entraînement de véhicule automobile selon la revendication 1, **caractérisé en ce que** le capteur (12, 13) d'organe d'entraînement fonctionne sans contact ou de manière tactile.

3. Agencement d'entraînement de véhicule automobile selon l'une des revendications 1 ou 2, **caractérisé en ce que** le capteur (12, 13) d'organe d'entraînement est réalisé en deux parties comportant une partie base (12) fixe et une partie mobile (13) qui est mobile par rapport à celle-ci et raccordée à l'organe d'entraînement (2, 3).

4. Agencement d'entraînement de véhicule automobile selon l'une des revendications 1 à 3, **caractérisé en ce que** le capteur (12, 13) d'organe d'entraînement est un capteur à effet Hall, un capteur de lumière, une résistance au coulissement ou similaire.

5. Agencement d'entraînement de véhicule automobile selon la revendication 1, **caractérisé en ce que** l'unité de commande (16) recalibre les signaux de capteur en fonction des signaux supplémentaires et/ou de données injectées de l'extérieur.

6. Agencement d'entraînement de véhicule automobile selon la revendication 1, **caractérisé en ce que** le volet de véhicule automobile est réalisé comme une porte pivotante (14) de véhicule automobile, une porte coulissante de véhicule automobile, un toit coulissant de véhicule automobile, une trappe de réservoir de véhicule automobile, un hayon de véhicule automobile, etc.
